(19) Europäisches Patentamt
European Patent Office
Office européen des brevets

(11) **EP 1 659 019 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(51) Int Cl.:
***B60M 1/28*** (2006.01)

(21) Anmeldenummer: **05110754.8**

(22) Anmeldetag: **15.11.2005**

(54) **Optisches Verfahren und optische Einrichtung zur Überwachung eines elektrischen Leiters**

Optical method and system for controlling an electrical cable

Méthode et système optique pour le contrôle d'une ligne électrique

(84) Benannte Vertragsstaaten:
**DE ES FR NL**

(30) Priorität: **17.11.2004 DE 102004055524**

(43) Veröffentlichungstag der Anmeldung:
**24.05.2006 Patentblatt 2006/21**

(73) Patentinhaber: **Siemens Aktiengesellschaft**
**80333 München (DE)**

(72) Erfinder:
• **Bosselmann, Thomas**
**91080, Marloffstein (DE)**
• **Theune, Nils-Michael**
**90522, Oberasbach (DE)**

(56) Entgegenhaltungen:
**DE-A1- 19 854 369        FR-A- 2 854 689**
**JP-A- 60 166 536        US-B1- 6 784 983**

• **ARAUJO F M ET AL: "SURVEILLANCE OF FIBER OPTIC CABLES AND ELECTRIC POWER CABLES USING FIBER BRAGG GRATING SENSORS" PROCEEDINGS OF THE SPIE, SPIE, BELLINGHAM, VA, US, Bd. 3541, November 1998 (1998-11), Seiten 278-289, XP002931504 ISSN: 0277-786X**
• **KALINOWSKI H J ET AL: "MULTIPLEXED FIBER OPTICS BRAGG GRATING SENSORS FOR STRAIN AND TEMPERATURE MEASUREMENTS IN POWER SYSTEMS" 1999, PROCEEDINGS OF THE SPIE, SPIE, BELLINGHAM, VA, US, PAGE(S) 544-553 , XP002931503 ISSN: 0277-786X * das ganze Dokument ***
• **PATENT ABSTRACTS OF JAPAN Bd. 010, Nr. 002 (M-444), 8. Januar 1986 (1986-01-08) & JP 60 166536 A (NIPPON KOKUYU TETSUDO; others: 01), 29. August 1985 (1985-08-29)**

EP 1 659 019 B1

**Beschreibung**

Optisches Verfahren zur Überwachung eines elektrischen Leiters mit mehreren Leiterabschnitten, die jeweils mit mindestens einem Faser-Bragg-Gitter-Sensor versehen sind und auf die nacheinander eine mechanische Belastung wirkt. Insbesondere handelt es sich bei dem Leiter um die Oberleitung oder einen Teil der Oberleitung, die zur elektrischen Energieversorgung eines Schienentriebfahrzeuges bestimmt ist.

Ein Schienentriebfahrzeug wird über einen elektrischen (Strom-)Leiter in Form einer Oberleitung mit elektrischer Energie versorgt. Die Energie gelangt mittels eines mit der Oberleitung in mechanischem Schleifkontakt stehenden Stromabnehmers von der Oberleitung über eine Schleifleiste zum Schienentriebfahrzeug. Um eine hohe Sicherheit, Verfügbarkeit und Zuverlässigkeit zu gewährleisten, sind außer der Oberleitung praktisch alle Betriebsmittel der Bahnenergieübertragung und -verteilung redundant ausgeführt. Bei der Oberleitung erfolgt dies aus technischen und wirtschaftlichen Gründen nicht. Dennoch zieht ein Ausfall der Oberleitung zumindest auf dem vom Oberleitungs-Ausfall betroffenen Streckenabschnitt meistens auch einen Ausfall der kompletten Bahn-Energieversorgung nach sich. Mit jedem derartigen Ausfall sind hohe Kosten verbunden.

Eine Oberleitung besteht im Wesentlichen aus etwa zwanzig, in Reihe geschalteten Teilelementen, die in Form von Maschen angeordnet sind und das so genannte Kettenwerk bilden. Fällt ein Teilelement aus, so fällt auch die Oberleitung insgesamt aus. Ein signifikanter Anteil der Ausfallursachen kann auf eine fehlerhafte Interaktion zwischen Schienentriebfahrzeug und der Oberleitung zurückgeführt werden.

So kann die Presskraft des Stromabnehmers an den so genannten Fahrdraht der Oberleitung unangemessen sein. Bei überhöhten Anpresskräften, die auch Kontaktkräfte genannt werden, wird der Fahrdraht und auch die Schleifleiste einem übermäßigen Verschleiß ausgesetzt. Bei zu niedrigen Kontaktkräften kann es im Fahrbetrieb auch zu Kontaktverlusten kommen, die Lichtbögen zwischen Fahrdraht und Schleifleiste hervorrufen können. Durch die sehr hohen Temperaturen im Lichtbogen können Schäden durch Materialabtrag am Fahrdraht und am Stromabnehmer entstehen. Weist die Schleifleiste beispielsweise Riefen auf, kann im Fahrbetrieb der Fahrdraht kurzzeitig in diese Riefen mitgeführt werden. Dies kann zu unspezifischen Auslenkungen des gesamten Kettenwerks führen. Im schlimmsten Fall kann es dabei zu einer "Entgleisung" des Stromabnehmers kommen.

Für Infrastrukturbetreiber, die für die Oberleitung verantwortlich sind, ist es daher von großem Interesse, mit einem so genannten "Quality Gate" die Interaktion zwischen der Oberleitung und dem entsprechenden Schienentriebfahrzeug erfassen zu können, um gegebenenfalls regulierend einzugreifen und auch beispielsweise die Schuldfrage bei Vorfällen eindeutig klären zu können. In "Stromabnehmerdiagnose im laufenden Betrieb durch stationäre Anhubmessung", H. Möller, et al., Elektrische Bahnen 100, 2002, Heft 6, S. 198-203 ist ein solches "Quality Gate" beschrieben. Die Veröffentlichung legt dar, wie mit der Ermittlung des Fahrdrahtanhubs auf die Kontaktkraft zwischen Stromabnehmer und Fahrdraht geschlossen wird, um defekte oder falsch eingestellte Stromabnehmer zu erkennen. Dabei wird der Anhub mit einem Seilzugpotentiometer als mechanischem Wegsensor gemessen. Das elektrische Signal des Seilzugpotentiometers wird dann zur Weiterverarbeitung über ein Kabel und einen Trennverstärker einem Messverstärker zugeführt. Sind beispielsweise zur Messsignalkontrolle mehrere Messungen vorgesehen, muss das Schienentriebfahrzeug mehrmals durch das "Quality Gate" fahren. Alternativ können aber auch an weiteren Masten jeweils ein "Quality Gate" angebracht werden. Konstruktionsbedingt ist in der Regel nur ein "Quality Gate" pro Mast installierbar.

Gegenstand der nicht-vorveröffentlichten DE-Anmeldung mit dem *amtlichen* Anmeldeaktenzeichen 10 2004 020 324.5 (Anmeldedatum: *26.04.2004*) ist ein optisches Verfahren und eine optische Einrichtung zur Überwachung eines elektrischen Leiters, insbesondere einer Oberleitung oder eines Teils der Oberleitung. Im Besonderen wird vorgeschlagen, die Kontaktkraft eines Stromabnehmers mittels Faser-Bragg-Gitter-Sensoren zu ermitteln.

Aus der DE 198 54 369 A1 ist ein Verfahren und eine Vorrichtung zur Überwachung einer Oberleitung bekannt, bei denen eine Mehrzahl von Kraftsensoren, deren Art nicht festegelgt wird, an der Oberleitung und den damit verbundenen Einrichtung befestigt. Deren Messresultate werden bezüglich ihrer zeitlichen Charakteristik ausgewertet und mit Kalibrierdaten verglichen, um die Art einer physikalischen Einwirkung auf den Fahrdraht zu ermitteln.

Aus der US 6,784,983 B1 ist ein System zur Überwachung von Hochspannungs-Überlandleitungen bekannt. Zur Überwachung von spezifischen, physisch stark beanspruchten Punkten einer Leitung werden Faser-Bragg-Sensoren eingesetzt. Die Wellenlängenkodierung der einzelnen Faser-Bragg-Sensoren dient hierbei der Bestimmung des Orts einer auftretenden Belastung der Leitung.

Der Erfindung liegt die Aufgabe zugrunde, ein Verfahren und eine Einrichtung anzugeben, die verglichen mit dem Stand der Technik eine weitgehend fehlerimmune, schnelle, einfache und kostengünstige Ermittlung der auf einen elektrischen Leiter wirkende mechanische Belastung ermöglichen.

Zur Lösung der das Verfahren betreffenden Aufgabe wird ein Verfahren entsprechend den Merkmalen des unabhängigen Patentanspruchs 1 angegeben.

Bei dem erfindungsgemäßen Verfahren handelt es sich um ein optisches Verfahren zur Überwachung eines elektrischen Leiters mit mehreren Leiterabschnitten, die jeweils mit mindestens einem Faser-Bragg-Gitter-Sensor versehen sind und auf die nacheinander eine mechanische Belastung wirkt, bei welchem Verfahren

- in die Faser-Bragg-Gitter-Sensoren mindestens ein Lichtsignal eingespeist wird,
- in jedem Sensor das Lichtsignal in Abhängigkeit von einer durch die mechanische Belastung des jeweiligen Leiterabschnittes hervorgerufenen Verformung verändert wird,
- den verformungsbedingten Veränderungen des mindestens einen Lichtsignals jeweils ein Messwert zugeordnet wird,
- über alle Messwerte ein Mittelwert bestimmt wird und
- dem Mittelwert der Messwerte die auf alle Leiterabschnitte nacheinander von außen wirkende, die mechanische Belastung verursachende Kraft ermittelt wird.

Zur Lösung der die Einrichtung betreffenden Aufgabe wird eine Einrichtung entsprechend den Merkmalen des unabhängigen Patentanspruchs 6 angegeben.

Bei der erfindungsgemäßen Einrichtung handelt es sich um eine optische Einrichtung zur Überwachung eines elektrischen Leiters mit mehreren Leiterabschnitten, die jeweils mit mindestens einem Faser-Bragg-Gitter-Sensor versehen sind und die nacheinander einer mechanischen Belastung auszusetzen sind, die zu ihrer Verformung und zu einer Änderung mindestens eines Lichtsignals führen, das mittels eines Einspeisemittels in ihren jeweils zugeordneten Sensor einzuspeisen ist, umfassend ein derart ausgestaltetes Auswertemittel, dass

- den verformungsbedingten Veränderungen des mindestens einen Lichtsignals jeweils ein Messwert zugeordnet wird,
- über alle Messwerte ein Mittelwert bestimmt wird und
- aus dem Mittelwert der Messwerte die auf alle Leiterabschnitte nacheinander von außen wirkende, die mechanische Belastung verursachende Kraft ermittelt wird.

Die Erfindung beruht dabei insbesondere auf der Erkenntnis, dass sich Faser-Bragg-Gitter(FBG)-Sensoren aufgrund ihrer Multiplexfähigkeit auf einfache Weise zu einem Sensornetzwerk verknüpfen lassen. Darüber hinaus lassen sich die einzelnen FBG-Sensoren wegen ihrer geringen Abmessungen praktisch punktförmig an die zu untersuchenden Leiterabschnitte anbringen. So ist es möglich, entlang eines Leiters zahlreiche FBG-Sensoren zur Kraftbestimmung anzubringen, die beispielsweise nur über mindestens einen Lichtwellenleiter mit einem Auswertemittel verbunden sind. Wirkt auf die mit FBG-Sensoren versehnen Leiterabschnitte insbesondere nacheinander nahezu dieselbe Kraft, lassen sich auf besonders einfache Weise mit einer Mittelung aller Messwerte die Kraft mit geringem Fehler bestimmen. Darüber lässt sich über eine Statistische Auswertung aller Messwerte auch eine Aussage über die Qualität des ermittelten Messwertes treffen.

Die einzelnen FBG-Sensoren können beispielsweise mit vorbestimmten Abständen zwischen 1 cm und mehreren km in Serie in einem einzigen Lichtwellenleiter eingeschrieben sein. Ein Aufbau mit mehreren parallelen Lichtwellenleitern, in denen jeweils mehrere FBG-Sensoren angeordnet sind, ist ebenfalls möglich. Damit ist es möglich, 100 und mehr Sensoren in einem Lichtwellenleiter-Strang unterzubringen und auszulesen.

In jedem FBG-Sensor wird vom eingespeisten Lichtsignal ein durch die jeweilige Schwerpunktswellenlänge bestimmter Anteil zurückreflektiert, während der übrige Anteil durch den FBG-Sensor transmittiert wird. Die Schwerpunktswellenlänge ändert sich mit der am Messort herrschenden Einflussgröße, hier insbesondere der Verformung des Leiters durch Krafteinwirkung auf diesen. Diese Veränderung im Wellenlängengehalt (oder Wellenlängenspektrum) des jeweiligen zurückreflektierten (Teil-)Lichtsignals kann als Maß für die zu erfassende Einflussgröße verwendet werden. Es ist aber auch möglich, das transmittierte (Teil-)Lichtsignal auf die Veränderung im Wellenlängenspektrum zu untersuchen. Der Einsatz eines anderen optischen Sensors zur unmittelbaren Erfassung der Leiterverformung ist grundsätzlich ebenfalls möglich. So ist beispielsweise ein optischer Sensor auf Basis eines faseroptischen Fabry-Perot-Interferometers denkbar.

Als zu untersuchende Komponenten des Leiters kommt beispielsweise ein metallischer Draht oder verseilter Drahtstrang in Betracht, wie sie insbesondere bei Bahnoberleitungen verwendet wird. Aufgrund seiner geringen Baugröße lässt sich ein FBG-Sensor leicht an einer solchen Komponente anbringen. Hierfür ist entweder gar keine oder nur eine sehr geringe konstruktive Anpassung der Komponente, beispielsweise in Form einer Nut, erforderlich. Insbesondere kann so auch problemlos ein guter kraftschlüssiger Kontakt zur Messstelle hergestellt werden.

Ein Vorteil eines FBG-Sensors gegenüber einem konventionellen elektrischen Sensor ist seine intrinsische Potentialtrennung. Die optische Abfrage kann mittels einer optischen Freistrahlanordnung oder auch mittels mindestens einer dielektrischen Zuleitung, beispielsweise in Gestalt eines Lichtwellenleiters aus Glas oder aus Kunststoff, erfolgen. Damit ist es möglich, ohne gesondertem oder mit verhältnismäßig geringem Isolationsaufwand eine solche dielektrische Zu- oder Ableitung zu installieren. Aufgrund der hohen Verfügbarkeit von Standard-Glasfaserkomponenten, die sich besonders gut für die dielektrische Zu-/Ableitung einsetzen lassen, resultiert neben einem technischen auch ein großer wirtschaftlicher Vorteil.

Vorteilhafte Ausgestaltungen des Verfahrens gemäß der Erfindung ergeben sich aus den von Anspruch 1 abhängigen Ansprüchen.

Günstig ist es insbesondere, wenn Faser-Bragg-Gitter-Sensoren unterschiedlicher Bragg-Wellenlängen vorgesehen werden. Zur besseren Unterscheidbarkeit der Lichtsignalanteile haben zumindest die in einem Lichtwellenleiter angeordneten FBG-Sensoren vorzugsweise jeweils eine voneinander verschiedene Schwerpunktwellenlänge. Darüber hinaus haben auch diejenigen Sensoren, insbesondere Sensorenpaare, die zur Kraftmessung eines bestimmten Leiterabschnitts verwendet werden, vorzugsweise unterschiedliche Schwerpunktswellenlängen. Die Schwerpunktswellenlängen von mehreren FBG-Sensoren eines Lichtwellenleiters müssen gezwungenermaßen nicht unterschiedlich sein, wenn zur Unterscheidung der Antwortsignale verschiedener FBG-Sensoren beispielsweise ein OTDR (Optical Time Domain Reflectometer) verwendet wird.

Insbesondere kann das mindestens eine Lichtsignal in die Faser-Bragg-Gitter-Sensoren mit einer Bandbreite eingespeist werden, die die Bragg-Wellenlängen aller Faser-Bragg-Gitter-Sensoren umfasst. Hierzu kommt vorzugsweise eine breitbandige Lichtquelle, wie beispielsweise eine LED mit einer Bandbreite von etwa 45 nm, eine SLD mit einer Bandbreite von etwa 20 nm oder ein durchstimmbarer Laser mit einer Bandbreite von etwa 100 nm, zum Einsatz. Somit können mit einem einzigen Puls alle im Sensornetzwerk angeordneten FBG-Sensoren abgefragt werden.

Vorzugsweise wird das Verfahren und die Einrichtung zur Überwachung eines in der elektrischen Energieversorgung eines Schienentriebsfahrzeugs (= Bahn-Energieversorgung) vorhandenen Leiters eingesetzt. Insbesondere handelt es sich hierbei um die Oberleitung der Bahn-Energie-Versorgung. Eine Oberleitung beinhaltet hierbei Tragmasten, an denen in einigen Metern Höhe über den Bahngleisen ein Kettenwerk befestigt ist. Das Kettenwerk umfasst im Wesentlichen ein an den Masten befestigtes Tragseil, an dem unter Zwischenschaltung von Hängern der Fahrdraht befestigt ist. Insbesondere zur Überwachung dieses Kettenwerks lassen sich die Faser-Bragg-Gitter-Sensoren mit Vorteil einsetzen.

Damit das Schienentriebfahrzeug mit Energie versorgt werden kann, muss es über einen Stromabnehmer mit dem Leiter, insbesondere dem Fahrdraht, in Kontakt sein. Die dabei vom Stromabnehmer auf den Leiter wirkende Kraft, die auch Kontaktkraft genannt wird, wird mit dem erfindungsgemäßen Verfahren und der erfindungsgemäßen Einrichtung in besonders vorteilhafter Weise ermittelt.

Vorteilhafte Ausgestaltungen der Einrichtung gemäß der Erfindung ergeben sich aus den von Anspruch 6 abhängigen Ansprüchen.

Zur besseren Unterscheidbarkeit der Lichtsignalanteile weisen die Faser-Bragg-Gitter-Sensoren besonders vorteilhaft unterschiedliche Bragg-Wellenlängen auf.

Gemäß oben genanntem Vorteil erweist sich für die Einrichtung, dass das mindestens eine in die Faser-Bragg-Gitter-Sensoren eingespeiste Lichtsignal eine Bandbreite aufweist, die die Bragg-Wellenlängen aller Faser-Bragg-Gitter-Sensoren umfasst.

Es ist günstig, dass das Auswertemittel ein Medianfilter aufweist. Damit kann eine zusätzliche Fehlerimmunität der Einrichtung erreicht werden. Mit einem Medianfilter können extern bedingt kurzzeitige Störungen im Lichtsignal unterdrückt werden, ohne den Informationsgehalt des von den Sensoren herkommenden Signalanteils zu verlieren.

Bevorzugte, jedoch keinesfalls einschränkende Ausführungsbeispiele der Erfindung werden nunmehr anhand der Zeichnung näher erläutert. Zur Verdeutlichung ist die Zeichnung nicht maßstäblich ausgeführt, und gewisse Aspekte sind schematisiert dargestellt. Im Einzelnen zeigt

Figur 1     eine Einrichtung zur Überwachung eines elektrischen Leiters und

Figur 2     schematische Darstellung der Funktionsweise der Auswerteeinheit zur Bestimmung der auf den Leiter wirkenden Kraft.

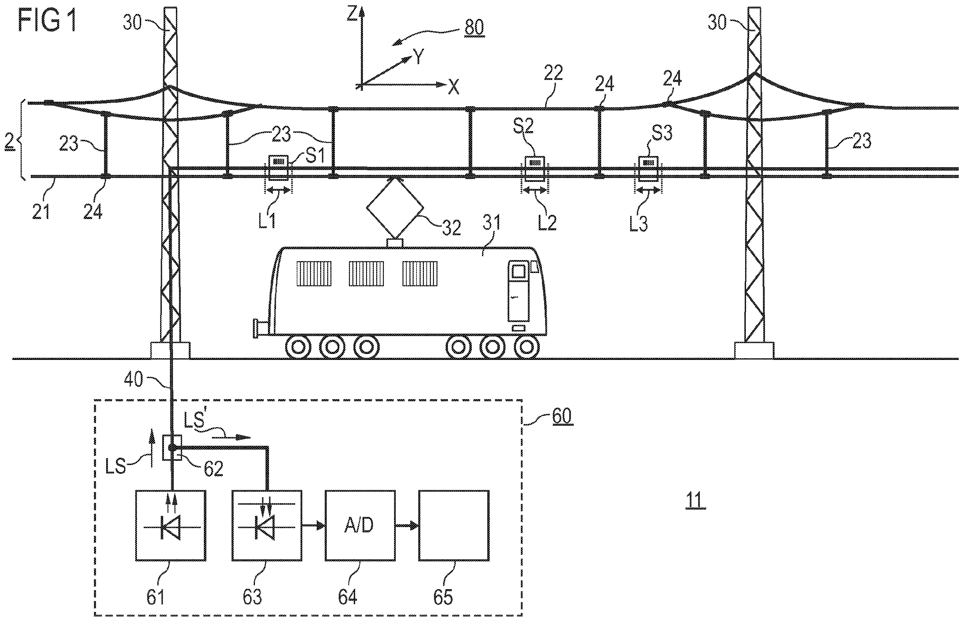

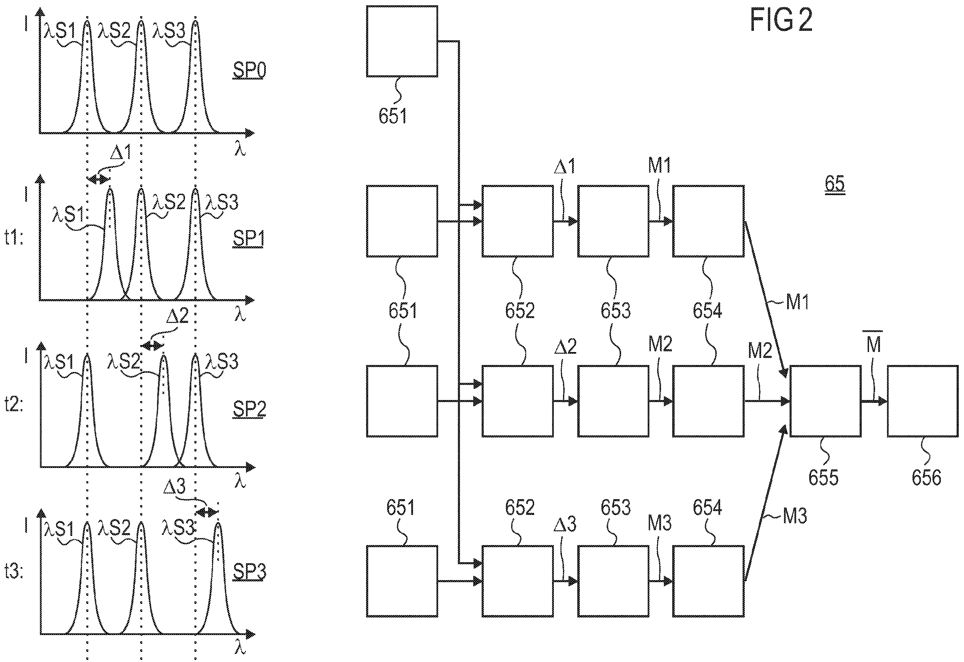

Einander entsprechende Teile sind in den Figuren 1 und 2 mit denselben Bezugszeichen versehen.

In Figur 1 ist eine Überwachungseinrichtung 11 zur Überwachung eines Leiters 2 in Form eines Kettenwerks einer Bahn-Oberleitung dargestellt. Die Oberleitung 2 dient zur Energieversorgung eines Schienentriebfahrzeugs 31 über einen Stromabnehmer 32.

Die Oberleitung 2 besteht im Wesentlichen aus stromtragfähigen Komponenten wie Einspeiseleitung (nicht dargestellt in Figur 1), Tragseil 22, Fahrdraht 21, Hängern 23 und den zugehörigen Verbindungselementen 24. Zur Halterung der Oberleitung 2 sind mehrere Masten 30 vorgesehen. Über den Fahrdraht 21 wird die zum Betrieb des Schienentriebfahrzeugs 31 benötigte Leistung von beispielsweise 12 MW und mehr an den Ort des Stromabnehmers 32 (Pantograph) des Schienentriebfahrzeugs 31 transportiert. Der Fahrdraht 21 steht mit einer (in Figur 1 nicht gezeigten) quer zum Fahrdraht 21 angeordneten Schleifleiste des Stromabnehmers 32 in Schleifkontakt. Die Schleifleiste wird dabei mit einer gewissen Kraft, der so genannten Kontaktkraft, gegen den Fahrdraht 21 gedrückt. Dadurch wird ein für die elektrische Energieeinspeisung ausreichender elektrischer Kontakt zwischen Fahrdraht 21 und Stromabnehmer 32 gebildet. Das zumindest bei einer Oberleitung 2, die für eine Geschwindigkeit des Schienentriebfahrzeugs 31 von über 100 km/h ausgelegt ist, vorhandene Tragseil 22 hat eine Tragefunktion und dient aber auch zusätzlich zur Stromzuführung.

Zur Verdeutlichung der auf den Fahrdraht 21 wirkenden Kraftrichtungen ist in Figur 1 ein Koordinatensystem 80 mit einer x-, y- und z-Achse aufgetragen. Die Kraftkomponente in z-Richtung kann als die Kontaktkraft verstanden werden. Die Kräfte in y-Richtung treten als Quer- und Schnittkräfte auf und sind beispielsweise auf die abschnittsweise Mitführung des Fahrdrahtes 21 in Riefen einer defekten Schleifleiste zurückzuführen. Quer- und Schnittkräfte treten auch aufgrund der Zickzack-Anordnung des Fahrdrahtes 21 in Fahrtrichtung auf, die bei Fahrt des Schienentriebfahrzeugs 31 eine Querbewegung des Fahrdrahtes 21 relativ zum Stromabnehmer 32 und eine damit einhergehende Reibungskraft zur Folge hat. Die Kräfte in x-Richtung werden Längskräfte genannt und werden durch die Reibung zwischen Schleifleiste und Fahrdraht 21 bei Fahrt in Fahrtrichtung hervorgerufen.

Zur Ermittlung der mechanischen Belastung sind Faser-Bragg-Gitter(FBG)-Sensoren S1, S2, S3 vorgesehen. Die in Figur 1 dargestellte Anzahl und Verteilung der FBG-Sensoren S1, S2, S3 ist nur beispielhaft zu verstehen. Andere Sensor-Verteilungen sind ebenso möglich. Die einzelnen Leiterabschnitte L1, L2, L3 längs des Leiters 2, die als Messabschnitte verstanden werden, können jeweils auch mit einem Sensorenpaar S1, S2, S3 versehen sein, die in Lichtwellenleitersträngen eingeschrieben sind. Jeder Einzelsensor eines Paares S1, S2, S3 ist einem Lichtwellenleiterstrang zugeordnet. Der in Figur 1 dargestellte Lichtwellenleiter 40 kann somit auch als Doppelstrang verstanden werden. Darüber hinaus sind an einem Messort auch mehr als zwei Sensoren, die jeweils einem Lichtwellenleiterstrang zugeordnet sind, denkbar. Die Lichtwellenleiterstränge können dabei Teile eines einzigen Lichtwellenleiters 40 sein oder aber auch jeweils einem Lichtwellenleiter 40 entsprechen. Der bzw. die Lichtwellenleiter 40 können einstückig aufgebaut sein oder aber auch aus mehreren zumindest optisch miteinander verbundenen Teilen. Es ist insbesondere vorteilhaft, dass die FBG-Sensoren S1, S2, S3 kraftschlüssig an den entsprechenden Leiterabschnitten L1, L2, L3 angeordnet sind. Dies gewährleistet, dass die kraftbedingte Verformung des entsprechenden Leiterabschnitts L1, L2, L3 vollständig auf die Sensoren S1, S2, S3 übertragen wird. Dabei lassen sich zur Verbindung des jeweiligen FBG-Sensors S1, S2, S3 mit dem entsprechenden Leiterabschnitt L1, S2, L3 eine Klebe- oder Lötverbindung sinnvoll einsetzen. Diese Verbindungsarten sind leicht auszuführen, gewähren eine kraftschlüssige Verbindung und sind zudem kostengünstig in ihrer Anwendung.

Das durch diese FBG-Sensoren S1, S2, S3 gebildete SensorNetzwerk wird durch ein Lichtsignal LS, das von einer breitbandigen Lichtquelle 61 erzeugt wird, abgefragt. Über einen Koppler 62 und den Lichtwellenleiter(n) 40 wird das Lichtsignal LS in die FBG-Sensoren S1, S2, S3 eingespeist.

Jeder der FBG-Sensoren S1, S2, S3 hat eine spezifische Schwerpunktswellenlänge λS1, λS2, λS3, die so genannte Bragg-Wellenlänge, die sich von derjenigen der anderen FBG-Sensoren S1, S2, S3 unterscheidet. In jedem Sensor S1, S2, S3 wird von dem eingespeisten Lichtsignal LS ein Anteil mit der jeweiligen Schwerpunktwellenlänge als Teil-Reflex-Lichtsignal zurückreflektiert. Der übrige Anteil des Lichtsignals LS passiert dagegen den betreffenden Sensor S1 und trifft auf den nächsten Sensor S2, S3. Die Bandbreite des eingespeisten Lichtsignals LS umfasst dabei vorzugsweise die Bragg-Wellenlängen λS1, λS2, λS3 aller Faser-Bragg-Gitter-Sensoren S1, S2, S3.

Am Koppler 62 steht ein von den FBG-Sensoren S1, S2, S3 zurückreflektiertes Lichtsignal LS' an, das sich aus den Teil-Reflex-Lichtsignalen der einzelnen FBG-Sensoren S1, S2, S3 zusammensetzt. Unter dem Einfluss der mechanischen Belastung des jeweiligen mit entsprechendem Sensor S1, S2, S3 versehenem Leiterabschnittes L1, L2, L3 verändert sich die Schwerpunktwellenlänge λS1, λS2, λS3 des jeweiligen Sensors S1, S2, S3 und damit auch der Wellenlängengehalt (= das Wellenlängenspektrum) des vom betreffenden Sensor S1, S2, S3 reflektierten Lichtsignals LS'. Diese Veränderung im Lichtwellengehalt dient als Maß für die zu erfassende Größe. Es ist aber auch ein Transmissionsbetrieb denkbar (in Figur 1 nicht gezeigt). Hier muss im Gegensatz zum Reflexionsbetrieb das gesamte von der Lichtquelle LS ausgesandte Wellenlängenspektrum auf fehlende Wellenlängenbereiche untersucht werden. Denn diese fehlenden Wellenlängenbereiche entsprechen den jeweiligen Schwerpunktswellenlängen λS1, λS2, λS3 der einzelnen Sensoren S1, S2, S3.

Das am Koppler 62 anstehende reflektierte Lichtsignal LS' wird vom Koppler 62 zu einem optoelektrischen Wandler 63 geleitet. Letzterer beinhaltet insbesondere ein spektral selektives Element zur Selektion der einzelnen Teil-Reflex-Lichtsignale, beispielsweise in Gestalt eines Polychromators und einem gegebenenfalls auch mehrteiligen Lichtempfänger. Zur Analyse des Lichtspektrums sind Gitter- oder Beugungsspektrometer denkbar. Im Anschluss an die optoelektronische Wandlung findet in einem A/D-Wandler 64 eine Analog/Digital-Wandlung statt. Das digitalisierte Ausgangssignal des A/D-Wandlers 64 wird einem digitalen Auswerteeinheit 65 zugeführt, in der die auf alle Leiterabschnitte L1, L2, L3 nacheinander von außen wirkende, die mechanische Belastung verursachende Kraft ermittelt wird.

Im Transmissionsbetrieb kann auf den Koppler 62 verzichtet werden. Hier wird an einem Ende des Lichtwellenleiter 40 bzw. der Lichtwellenleiter 40 das Lichtsignal LS mittels der Lichtquelle 61 angekoppelt und am anderen Ende des Lichtwellenleiters 40 bzw. der Lichtwellenleiter 40 von einem optoelektrischen Wandler 63 mit spektral selektivem Element detektiert.

Die Lichtquelle 61, der Koppler 62, der optoelektrische Wandler 63 mit spektral selektivem Element, der A/D-Wandler 64 und die Auswerteeinheit 65 sind in einer Sende/Empfangseinheit 60 zusammengefasst, wobei die Untereinheit aus Lichtquelle 61 und Koppler 62 als Mittel zur Einspeisung des Lichtsignals LS in die FBG-Sensoren S1, S2, S3 sowie die Untereinheit aus optoelektrischem Wandler 63 mit spektral selektivem Element, A/D-Wandler 64 und Auswerteeinheit 65 als Mittel zur Bestimmung der auf alle Leiterabschnitte L1, L2, L3 nacheinander von außen wirkende Kraft aufgefasst werden kann. In einem anderen nicht gezeigten Ausführungsbeispiel können diese Untereinheiten oder Teile davon auch baulich voneinander getrennt, also nicht als gemeinsame Sende-/Empfangseinheit 60, ausgebildet sein. Außerdem ist auch eine rein analoge Auswertung, beispielsweise mittels einer festverdrahteten elektronischen Schaltung denkbar. Dann wäre kein A/D-Wandler 64 vorhanden und die Auswerteeinheit 65 analog realisiert.

Die Sende-/Empfangseinheit 60 des in Figur 1 gezeigten Beispiels befindet sich auf Erdpotential, wo hingegen die Oberleitung 2 auf einem in der Bahn-Energieversorgung üblichen Potential, insbesondere von 15 bis 25 kV, liegt. Die Überbrückung dieser Potentialdifferenz erfolgt mittels des Lichtwellenleiters 40 bzw. der Lichtwellenleiter 40, über den/die auch das eingespeiste Lichtsignal LS und das reflektierte Lichtsignal LS' übertragen werden. Dadurch ergibt sich ein besonders kompakter Aufbau. Der/Die Lichtwellenleiter 40 besteht/bestehen aus einem dielektrischen Material, wie beispielsweise Glas oder Kunststoff. Damit sind keine gesonderten Maßnahmen zur elektrischen Isolation erforderlich.

Der in der Sende-/Empfangseinheit 60 ermittelte Wert für die auf alle Leiterabschnitte L1, L2, L3 nacheinander von außen wirkende Kraft kann mittels einer Funkübertragung zu einer Datenerfassungseinheit übermittelt werden, die wiederum mit einer Kontrolleinheit verbunden sein kann (in Figur 1 nicht dargestellt). In der Kontrolleinheit kann dabei ein Schutzkonzept für die Oberleitung 2 hinterlegt sein. Die Datenübertragung kann jedoch grundsätzlich auch leitungsgebunden elektrisch oder optisch erfolgen. Außerdem können die Sende-/Empfangseinheit 60 und die Datenerfassungseinheit auch als gemeinsame Einheit ausgebildet sein.

In Figur 2 ist in einer schematisch die Funktionsweise der Auswerteeinheit 65 zur Bestimmung der auf den Leiter 2 wirkenden Kraft dargestellt. Zur Veranschaulichung wird angenommen, dass sich das Schienentriebfahrzeug 31 in x-Richtung bewegt und der Stromabnehmer 32 des Schientriebfahrzeugs 31 zu aufeinander folgenden Zeitpunkten t1, t2 und t3 die mit den entsprechenden Sensoren S1, S2 und S3 versehene Leiterabschnitte L1, L2, L3 nacheinander maximal verformt.

Das von den FBG-Sensoren S1, S2, S3 rückgestreute Lichtsignal LS' weist ein Wellenlängenspektrum gemäß der in Figur 2 schematisch dargestellten Spektren SP0, SP1, SP2, SP3 auf. Die Abszisse stellt die Wellenlänge λ dar, während auf der Ordinate die Intensität I des rückgestreuten Lichtsignals LS' aufgetragen ist. Die Spektren SP1, SP2 und SP3 sind dabei den jeweiligen Zeiten t1, t2 und t3 zugeordnet, während das Spektrum SP0 ein Referenzspektrum ohne Krafteinwirkung des Stromabnehmers auf den Leiter darstellt. Jedes Spektrum weist drei Maxima auf, die den momentanen Schwerpunktswellenlängen λS1, λS2, λS3 der zugeordneten FBG-Sensoren S1, S2, S3 entsprechen. Bei Krafteinwirkung auf den ersten Leiterabschnitt L1 zum Zeitpunkt t1 verschiebt sich die Schwerpunktswellenlänge λS1 um Δ1 gegenüber dem "kraftlosen" Zustand gemäß Spektrum SP0. Der Einfachheit halber wird angenommen, dass auf die übrigen beiden Leiterabschnitte L2 und L3 keine Kraft wirkt. Deren Schwerpunktswellenlänge λS2 und λS3 bleibt damit konstant. Entsprechend der Ausführung zum Zeitpunkt t1 ändert sich zum Zeitpunkt t2 die Schwerpunktwellenlängen λS2 des Sensors S2 um Δ2 und zum Zeitpunkt t3 die Schwerpunktwellenlängen λS3 des Sensor S3 um Δ3.

In einem ersten Schritt 651 kann das digitalisierte Signalspektrum einem Medianfilter zugeführt werden. Damit ist eine zusätzliche Fehlerimmunität der Einrichtung ermöglicht. Da Medianfilter kantenerhaltende Filter sind, können mit dem Medianfilter extern bedingte kurzeitige Störungen im digitalisierten Signal unterdrückt werden, ohne den Informationsgehalt zu verlieren. Durch den Vergleich der Spektren SP1, SP2, SP3 bei mechanischer Belastung mit dem Spektrum SP0 ohne mechanische Belastung wird in einem nächsten Schritt 652 die jeweilige Änderung Δ1, Δ2, Δ3 der Schwerpunktwellenlänge λS1, λS2, λS3 bestimmt. Der jeweiligen Verschiebung Δ1, Δ2, Δ3 wird im folgenden Schritt 653 ein entsprechender Messwert M1, M2, M3 für die Verformung des entsprechenden Leiterabschnittes L1, L2, L3 zugeordnet. Die Messwerte M1, M2, M3 können somit auch als Dehnungstransiente verstanden werden. Sie werden in einem nächsten Schritt 654 in einem elektronischen Speichermittel, insbesondere einem Puffer, gespeichert. Nach der Aufnahme des letzten Messwertes, hier Messwert M3, wird im folgenden Schritt 655 das arithmetische Mittel aus allen Messwerten gemäß der bekannten Formel

$$\overline{M} = \frac{1}{n} \sum_{i=1}^{n} M_i$$

gebildet. n ist dabei die Zahl der mit FBG-Sensoren versehenen Leiterabschnitte. Im Ausführungsbeispiel von Figur 2 ist n = 3. In einem letzten Schritt 656 wird aus dem gemittelten Messwert M die vom Stromabnehmer 32 auf den Leiter 2, insbesondere den Fahrdraht 21, ausgeübte Kraft ermittelt.

In einem weiteren nicht dargestellten Ausführungsbeispiel ist auch eine abgewandelte Funktionsweise der Auswerteeinheit 65 denkbar. Insbesondere bei FBG-Sensoren S1, S2, S3 mit gleichen Schwerpunktswellenlänge (λS1 = λS2 = λS3) ist vorgesehen, die jeweilige mit dem Medianfilter 651 gefilterten Signalspektren entsprechend den Zeitpunkten t1, t2 und t3 beispielsweise auf den Zeitpunkt t1 zeitlich zu korrigieren und aus den korrigierten Spektren das arithmetische Mittel zu bilden. Aus dem gemittelten Spektrum wird dann in angegebener Weise eine gemittelte Wellenlängenverschiebung und daraus ein gemittelter Messwert M für die Verformung aller zugeordneter Leiterabschnittes L1, L2, L3 bestimmt. Aus diesem Messwert M kann dann in einem letzten Schritt ebenfalls die vom Stromabnehmer 32 auf den Leiter 2, insbesondere den Fahrdraht 21, ausgeübte Kraft ermittelt werden.

**Patentansprüche**

1. Optisches Verfahren zur Überwachung eines elektrischen Leiters (2, 21) einer zur elektrischen Energieversorgung eines Schienentriebfahrzeugs (31) bestimmten Oberleitung mit mehreren Leiterabschnitten (L1, L2, L3),

   - auf die jeweils nacheinander eine von einem Stromabnehmer (32) des Schienentriebfahrzeuges (31) ausgehende Kraft wirkt, welche bei Kontaktierung des Stromabnehmers (32) mit dem jeweiligen Leiterabschnitt (L1, L2, L3) durch den Stromabnehmer (32) bewirkt wird,
   - die durch die nacheinander auf die Leiterabschnitte (L1, L2, L3) wirkende Kontaktkraft zeitlich aufeinander folgend verformt werden,

   **dadurch gekennzeichnet, dass**

   - die Leiterabschnitte (L1, L2, L3) jeweils mit mindestens einem Faser-Bragg-Gitter-Sensor (S1, S2, S3) mit jeweils zugeordneter Bragg-Wellenlänge ($\lambda$S1, $\lambda$S2, $\lambda$S3) versehen sind,
   - wobei die entsprechenden den Faser-Bragg-Gitter-Sensoren (S1, S2, S3) zugeordneten Bragg-Wellenlängen ($\lambda$S1, $\lambda$S2, $\lambda$S3) durch die Kontaktkraft zeitlich aufeinander folgend verändert werden,

   bei welchem Verfahren

   - in die Faser-Bragg-Gitter-Sensoren (S1, S2, S3) mindestens ein Lichtsignal (LS) eingespeist wird,
   - in jedem Sensor (S1, S2, S3) das Lichtsignal (LS) in seinem Wellenlängengehalt in Abhängigkeit von der zeitlich aufeinander folgenden Veränderung der entsprechenden den Faser-Bragg-Gitter-Sensoren (S1, S2, S3) zugeordneten Bragg-Wellenlängen ($\lambda$S1, $\lambda$S2, $\lambda$S3) verändert wird,
   - den zeitlich aufeinander folgenden Änderungen ($\Delta$1, $\Delta$2, $\Delta$3) des Wellenlängengehalts jeweils ein Messwert (M1, M2, M3) zugeordnet wird,
   - über alle Messwerte (M1, M2, M3) ein Mittelwert ($\overline{M}$) bestimmt wird und
   - aus dem Mittelwert ($\overline{M}$) der Messwerte (M1, M2, M3) die auf alle Leiterabschnitte (L1, L2, L3) nacheinander wirkende Kontaktkraft ermittelt wird.

2. Verfahren nach Anspruch 1, bei dem Faser-Bragg-Gitter-Sensoren (S1, S2, S3) unterschiedlicher Bragg-Wellenlängen ($\lambda$S1, $\lambda$S2, $\lambda$S3) vorgesehen werden.

3. Verfahren nach Anspruch 1 oder 2, bei dem das mindestens eine Lichtsignal (LS) in die Faser-Bragg-Gitter-Sensoren (S1, S2, S3) mit einer Bandbreite eingespeist wird, die die Bragg-Wellenlängen ($\lambda$S1, $\lambda$S2, $\lambda$S3) aller Faser-Bragg-Gitter-Sensoren (S1, S2, S3) umfasst.

4. Optische Einrichtung zur Überwachung eines elektrischen Leiters (2, 21) einer zur elektrischen Energieversorgung eines Schienentriebfahrzeugs (31) bestimmten Oberleitung mit mehreren Leiterabschnitten (L1, L2, L3),

   - die jeweils nacheinander einer von einem Stromabnehmer (32) des Schienentriebfahrzeuges (31) ausgehenden, bei Kontaktierung des Stromabnehmers (32) mit dem jeweiligen Leiterabschnitt (L1, L2, L3) durch den Stromabnehmer (32) bewirkten Kraft auszusetzen sind,
   - die durch die nacheinander auf die Leiterabschnitte (L1, L2, L3) wirkende Kontaktkraft zeitlich aufeinander folgend verformbar sind,

   **dadurch gekennzeichnet, dass**

   - die Leiterabschnitte (L1, L2, L3) jeweils mit mindestens einem Faser-Bragg-Gitter-Sensor (S1, S2, S3) mit jeweils zugeordneter Bragg-Wellenlänge ($\lambda$S1, $\lambda$S2, $\lambda$S3) versehen sind,
   - wobei die entsprechenden den Faser-Bragg-Gitter-Sensoren (S1, S2, S3) zugeordneten Bragg-Wellenlängen ($\lambda$S1, $\lambda$S2, $\lambda$S3) durch die Kontaktkraft zeitlich aufeinander folgend veränderbar sind,
   und

   - mindestens ein Lichtsignal (LS), das mittels eines Einspeisemittels (62) in ihren jeweils zugeordneten Sensor (S1, S2, S3) einzuspeisen ist, in seinem Wellenlängengehalt in Abhängigkeit von der zeitlich aufeinander folgenden Veränderung der entsprechenden den Faser-Bragg-Gitter-Sensoren (S1, S2, S3) zugeordneten Bragg-Wellenlängen ($\lambda$S1, $\lambda$S2, $\lambda$S3) veränderbar ist

   umfassend ein derart ausgestaltetes Auswertemittel (65), dass

   - den zeitlich aufeinander folgenden Änderungen ($\Delta$1, $\Delta$2, $\Delta$3) des Wellenlängengehalts jeweils ein Messwert (M1, M2, M3) zuordenbar ist,

- über alle Messwerte (M1, M2, M3) ein Mittelwert ($\overline{M}$) bestimmbar ist und
- aus dem Mittelwert $\overline{M}$ der Messwerte (M1, M2, M3) die auf alle Leiterabschnitte (L1, L2, L3) nacheinander wirkende Kontaktkraft ermittelbar ist.

5. Einrichtung nach Anspruch 4, mit Faser-Bragg-Gitter-Sensoren (S1, S2, S3) unterschiedlicher Bragg-Wellenlängen ($\lambda$S1, $\lambda$S2, $\lambda$S3).

6. Einrichtung nach Anspruch 4 oder 5, bei dem das in die Faser-Bragg-Gitter-Sensoren (S1, S2, S3) eingespeiste Lichtsignal (LS) eine Bandbreite aufweist, die die Bragg-Wellenlängen ($\lambda$S1, $\lambda$S2, $\lambda$S3) aller Faser-Bragg-Gitter-Sensoren (S1, S2, S3) umfasst.

7. Einrichtung nach einem der Ansprüche 4 bis 6, bei der das Auswertemittel (65) ein Medianfilter (651) aufweist.

**Claims**

1. Optical method for controlling an electrical cable (2, 21) of a catenary intended to supply electrical energy to a railway power unit (31) and having a number of cable sections (L1, L2, L3),

   - on which a force emanating from a pantograph (32) of the railway power unit (31) acts consecutively in each case, which force is effected by the pantograph (32) when the pantograph (32) makes contact with the respective cable section (L1, L2, L3),
   - which are deformed consecutively in terms of time by the contact force acting consecutively on the cable sections (L1, L2, L3),

   **characterised in that**

   - the cable sections (L1, L2, L3) are each provided with at least one fibre Bragg grating sensor (S1, S2, S3) with assigned Bragg wavelengths ($\lambda$S1, $\lambda$S2, $\lambda$S3) in each case,
   - wherein the corresponding Bragg wavelengths assigned to the fibre Bragg grating sensors (S1, S2, S3) are changed consecutively in terms of time by the contact force, in which method
   - at least one light signal (LS) is fed into the fibre Bragg grating sensors (S1, S2, S3),
   - in each sensor (S1, S2, S3) the light signal (LS) is changed in terms of its wavelength content as a function of the change, consecutively in terms of time, in the corresponding Bragg wavelengths ($\lambda$S1, $\lambda$S2, $\lambda$S3) assigned to the fibre Bragg grating sensors (S1, S2, S3),

   - a measured value (M1, M2, M3) is assigned in each case to the changes ($\Delta$1, $\Delta$2, $\Delta$3) in the wavelength content which are consecutive in terms of time,
   - an average value ($\overline{M}$) is determined across all measured values (M1, M2, M3) and
   - the contact force acting consecutively on all cable sections (L1, L2, L3) is determined from the average value ($\overline{M}$) of the measured values (M1, M2, M3).

2. Method according to claim 1, in which fibre Bragg grating sensors (S1, S2, S3) of different Bragg wavelengths ($\lambda$S1, $\lambda$S2, $\lambda$S3) are provided.

3. Method according to claim 1 or 2, in which the at least one light signal (LS) is fed into the fibre Bragg grating sensors (S1, S2, S3) with a bandwidth which comprises the Bragg wavelengths ($\lambda$S1, $\lambda$S2, $\lambda$S3) of all fibre Bragg grating sensors (S1, S2, S3).

4. Optical device for controlling an electrical cable (2, 21) of a catenary intended to supply electrical energy to a railway power unit (31) and having a number of cable sections (L1, L2, L3),

   - which are to be exposed, consecutively in each case, to a force effected by the pantograph (32) and emanating from a pantograph (32) of the railway power unit (31) when the pantograph (32) makes contact with the respect cable section (L1, L2, L3),
   - which can be deformed consecutively in terms of time by the contact force acting consecutively on the cable sections (L1, L2, L3),

   **characterised in that**

   - the cable sections (L1, L2, L3) are each provided with at least one fibre Bragg grating sensor (S1, S2, S3) with assigned Bragg wavelengths ($\lambda$S1, $\lambda$S2, $\lambda$S3) in each case,
   - wherein the corresponding Bragg wavelengths ($\lambda$S1, $\lambda$S2, $\lambda$S3) assigned to the fibre Bragg grating sensors (S1, S2, S3) can be changed consecutively in terms of time by the contact force, and
   - at least one light signal (LS), which is to be fed into its respectively assigned sensor by means of an infeed means (62), can be changed in terms of its wavelength content as a function of the change, which is consecutive in terms of time, in the corresponding Bragg wavelengths ($\lambda$S1, $\lambda$S2, $\lambda$S3) assigned to the fibre Bragg grating sensors (S1, S2, S3), comprising an evaluation means (65) configured in this way such that

- a measured value (M1, M2, M3) can be assigned in each case to the changes (Δ1, Δ2, Δ3), which are consecutive in terms of time, in the wavelength content,
- an average value ($\overline{M}$) can be determined across all measured values (M1, M2, M3) and
- the contact force acting consecutively on all cable sections (L1, L2, L3) can be determined from the average value $\overline{M}$ of the measured values (M1, M2, M3).

5. Device according to claim 4, with fibre Bragg grating sensors (S1, S2, S3) with a different Bragg wavelength (λS1, λS2, λS3).

6. Device according to claim 4 or 5, in which the light signal (LS) fed into the fibre Bragg grating sensors (S1, S2, S3) has a bandwidth which comprises the Bragg wavelengths (λS1, λS2, λS3) of all fibre Bragg grating sensors (S1, S2, S3).

7. Device according to one of claims 4 to 6, in which the evaluation means (65) has a median filter (651).


**Revendications**

1. Procédé optique de contrôle d'une ligne (2, 21) électrique d'une ligne de contact destinée à l'alimentation en énergie électrique d'un véhicule (31) ferroviaire et ayant plusieurs tronçons (L1, L2, L3) de ligne,

- sur lesquels une force, provenant d'un pantographe (32) du véhicule ferroviaire (31), agit successivement, force qui, à la mise en contact du pantographe (32) avec le tronçon (L1, L2, L3) de ligne respectif, est provoquée par le pantographe (32),
- qui sont déformés successivement dans le temps par la force de contact agissant successivement sur les tronçons (L1, L2, L3) de ligne,

**caractérisé en ce que**

- les tronçons (L1, L2, L3) de ligne sont pourvus chacun d'au moins un capteur (S1, S2, S3) à fibre-réseau de Bragg ayant respectivement une longueur d'onde de Bragg (ΛS1, ΛS2, ΛS3) associée,
- dans lequel on modifie successivement dans le temps, par la force de contact, les longueurs d'onde de Bragg (ΛS1, ΛS2, ΛS3) associées aux capteurs (S1, S2, S3) à fibre-réseau de Bragg,

procédé dans lequel

- on injecte dans les capteurs (S1, S2, S3) à fibre-réseau de Bragg au moins un signal (LS) lumineux,
- on modifie, dans chaque capteur (S1, S2, S3), le signal (LS) lumineux dans sa teneur en longueur d'onde, en fonction de la modification, successivement dans le temps, des longueurs d'onde de Bragg (ΛS1, ΛS2, ΛS3) associées aux capteurs (S1, S2, S3) à fibre-réseau de Bragg,
- on affecte une valeur (M1, M2, M3) de mesure aux modifications (Δ1, Δ2, Δ3) se succédant dans le temps de la teneur en longueurs d'onde,
- on détermine une valeur ($\overline{M}$) moyenne de toutes les valeurs (M1, M2, M3) de mesure et
- on détermine, à partir de la valeur ($\overline{M}$) moyenne des valeurs (M1, M2, M3) de mesure, la force de contact agissant successivement sur tous les tronçons (L1, L2, L3) de ligne.

2. Procédé suivant la revendication 1, dans lequel on prévoit des capteurs (S1, S2, S3) à fibre-réseau de Bragg de longueurs d'onde de Bragg (ΛS1, ΛS2, ΛS3) différentes.

3. Procédé suivant la revendication 1 ou 2, dans lequel on injecte le au moins un signal (LS) lumineux dans les capteurs (S1, S2, S3) à fibre-réseau de Bragg à une largeur de bande qui comprend les longueurs d'onde de Bragg (ΛS1, ΛS2, ΛS3) de tous les capteurs (S1, S2, S3) à fibre-réseau de Bragg).

4. Dispositif optique de contrôle d'une ligne (2, 21) électrique d'une ligne de contact destinée à l'alimentation en énergie électrique d'un véhicule (31) ferroviaire et ayant plusieurs tronçons (L1, L2, L3) de ligne,

- qui sont soumis à une force provoquée par un pantographe (32) et provenant du pantographe (32) du véhicule (31) ferroviaire lors de la mise en contact du pantographe (32) avec le tronçon (L1, L2, L3) de ligne respectif,
- qui sont déformables, d'une manière successive dans le temps, par la force de contact s'appliquant successivement aux tronçons (L1, L2, L3) de ligne,

**caractérisé en ce que**

- les tronçons (L1, L2, L3) de ligne sont pourvus respectivement d'au moins un capteur (S1, S2, S3) à fibre-réseau de Bragg ayant chacun des longueurs d'onde de Bragg (ΛS1, ΛS2, ΛS3) associées,
- dans lequel les longueurs d'onde de Bragg (ΛS1, ΛS2, ΛS3), associées aux capteurs (S1, S2, S3) à fibre-réseau de Bragg, peuvent être modifiées successivement dans le temps par la force de contact et

- au moins un signal (LS) lumineux, qui peut être injecté à l'aide d'un moyen (62) d'injection dans son capteur (S1, S2, S3) associé, peut être modifié dans sa teneur en longueur d'onde en fonction de la modification, successivement dans le temps, des longueurs d'onde de Bragg ($\Lambda$S1, $\Lambda$S2, $\Lambda$S3) associées aux capteurs (S1, S2, S3) à fibre-réseau de Bragg,

comprenant un moyen (65) d'exploitation conformé,

- de manière à pouvoir associer respectivement une valeur (M1, M2, M3) de mesure aux modifications ($\Delta$1, $\Delta$2, $\Delta$3), se succédant dans le temps, de la teneur en longueur d'onde,
- de manière à pouvoir déterminer une valeur ($\bigcirc$M) de toutes leurs valeurs (M1, M2, M3) de mesure et
- de manière, à partir de la valeur $\bigcirc$M moyenne des valeurs (M1, M2, M3) de mesure, à pouvoir déterminer la force de contact agissant successivement sur tous les tronçons (L1, L2, L3) de ligne.

5. Dispositif suivant la revendication 4, comprenant des capteurs (S1, S2, S3) à fibre-réseau de Bragg de longueurs d'onde de Bragg ($\Lambda$S1, $\Lambda$S2, $\Lambda$S3) différentes.

6. Dispositif suivant la revendication 4 ou 5, dans lequel le signal (LS) lumineux injecté dans les capteurs (S1, S2, S3) à fibre-réseau de Bragg a une largeur de bande qui comprend les longueurs d'onde de Bragg ($\Lambda$S1, $\Lambda$S2, $\Lambda$S3) de tous les capteurs (S1, S2, S3) à fibre-réseau de Bragg.

7. Dispositif suivant l'une des revendications 4 à 6, dans lequel le moyen (65) d'exploitation a un filtre (651) médian.

FIG 1

EP 1 659 019 B1

FIG 2

SP0

$\lambda S1$ $\lambda S2$ $\lambda S3$

I

$\lambda$

t1: SP1

$\Delta 1$

$\lambda S1$ $\lambda S2$ $\lambda S3$

I

$\lambda$

t2: SP2

$\Delta 2$

$\lambda S1$ $\lambda S2$ $\lambda S3$

I

$\lambda$

t3: SP3

$\Delta 3$

$\lambda S1$ $\lambda S2$ $\lambda S3$

I

$\lambda$

651

$\Delta 1$ M1

651 652 653 654 M1

$\Delta 2$ M2

651 652 653 654 M2 $\overline{M}$

655 656

651 652 653 654 M3

$\Delta 3$ M3

65

EP 1 659 019 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004020324
- DE 19854369 A1
- US 6784983 B1

**In der Beschreibung aufgeführte Nicht-Patentliteratur**

- **H. MÖLLER et al.** Stromabnehmerdiagnose im laufenden Betrieb durch stationäre Anhubmessung. *Elektrische Bahnen,* 2002, vol. 100, 198-203